# EUROPÄISCHE PATENTSCHRIFT

(11) **EP 3 804 944 B1**
(45) Veröffentlichungstag und Bekanntmachung des Hinweises auf die Patenterteilung: **20.04.2022**
(21) Anmeldenummer: 20199229.4
(22) Anmeldetag: 30.09.2020
(51) Int. Cl.: B29C 45/14, B29C 33/12, B29C 45/84, B29C 45/76

(54) **WERKZEUGHÄLFTE UND VERFAHREN ZUM HERSTELLEN EINES SPRITZGUSSTEILS MIT WENIGSTENS EINEM BUCHSENARTIGEN EINLEGETEIL**
TOOL HALF AND METHOD FOR MANUFACTURING AN INJECTION MOULDED PART WITH AT LEAST ONE SOCKET-TYPE INSERT
MOITIÉ D'OUTIL ET PROCÉDÉ DE FABRICATION D'UNE PIÈCE MOULÉE PAR INJECTION POURVU D'AU MOINS UNE PIÈCE D'INSERTION EN FORME DE DOUILLE

(30) Priorität: 08.10.2019 DE 102019126938
(43) Veröffentlichungstag der Anmeldung: 14.04.2021
(73) Patentinhaber: Lisa Dräxlmaier GmbH, 84137 Vilsbiburg (DE)
(72) Erfinder: Esterbauer, Peter, 5282 Ranshofen (AT); Püschel, Stefan, 4982 Obernberg/Inn (AT); Peterlechner, Hermann, 5145 Neukirchen (AT); Greifeneder, Daniel, 4963 St. Peter am Hart (AT); Rainer, Liedtke, 5280 Braunau/Inn (AT)

(56) Entgegenhaltungen:
- CH-A5- 634 505
- DD-A1- 251 103
- DE-A1- 3 135 259
- DE-A1- 10 322 622
- DE-A1-102011 120 403
- DE-A1-102015 114 270
- DE-U- 7 417 692
- US-A- 3 303 256
- US-A- 4 443 173

## Beschreibung

### Technisches Gebiet

Die vorliegende Erfindung betrifft eine Werkzeughälfte und ein Verfahren zum Herstellen eines Spritzgussteils mit wenigstens einem buchsenartigen Einlegeteil.

### Stand der Technik

Es ist an sich bekannt, bei Spritzgussteilen Einlegeteile, beispielsweise in Form von Buchsen, Bundbuchsen, Gewindebuchsen, Muttern und dergleichen zu integrieren. Dafür werden solche Einlegeteile im Bereich einer Kavität eines Spritzgusswerkzeugs angeordnet und mit einem Kunststoff zumindest teilweise umspritzt. Das Handling und die Positionierung solcher Einlegeteile im Bereich einer Kavität eines Spritzgusswerkzeugs kann sich mitunter relativ aufwendig gestalten. Dies kann mit einer aufwendigen und kostenintensiven Peripherie, langen Zykluszeiten und einem relativ hohen Platzbedarf bei einer Spritzgussmaschine miteinhergehen.

Die DE 31 35 259 A1 beschreibt ein Verfahren zum automatischen Einführen in eine Spritzgussform.

Die DE 74 17 692 U beschreibt eine Vorrichtung zum Beschicken einer Anzahl von in einer Spritzmaschine oder dergleichen nebeneinander angeordneten Formhohlräumen mit Einlegeelementen, wie Versteifungsringen oder dergleichen.

Die US 4 443 173 A beschreibt ein Verfahren und eine Vorrichtung zum Zuführen von Einsätzen, die anschließend in ein Gehäuse eines elektrischen Verbinders oder dergleichen geformt werden sollen, und insbesondere einen Mechanismus, der ein Verkleben der Einsätze verhindert, wenn sie der Formstation zugeführt werden.

Die CH 634 505 A5 zeigt eine Formanlage mit einer Form und einer integrierten Vorrichtung, die das automatische Einsetzen der Gefangenen in einen Formhohlraum gewährleistet, dadurch gekennzeichnet, dass die Form mindestens einen Schieber umfasst, der dazu bestimmt ist, mindestens einen Gefangenen zu platzieren.

Die DE 103 22 622 A1 zeigt ein Kunststoff-Formwerkzeug mit einem Kern und einer Matrize, wobei die Form eines zu schaffenden Kunststoffteils entspricht.

Die US 3 303 256 A zeigt Kunststoffformmaschinen zum Formen von Kunststoffläufern, wobei Einsätze verwendet werden und der Kunststoffabschnitt des Läufers direkt auf den Einsatz geformt wird.

Die DE 10 2011 120 403 A1 zeigt eine Vorrichtung zum Anspritzen eines Kunststoff-Formteils, die eine Form zur bereichsweisen Aufnahme des Funktionsteils aufweist.

### Beschreibung der Erfindung

Es ist daher die Aufgabe der vorliegenden Erfindung, eine Lösung bereitzustellen, mittels welcher ein Spritzgussteil mit wenigstens einem integrierten buchsenartigen Einlegeteil besonders einfach hergestellt werden kann.

Diese Aufgabe wird durch eine Werkzeughälfte für eine Spritzgussmaschine sowie durch ein Verfahren zum Herstellen eines Spritzgussteils mit den Merkmalen der unabhängigen Ansprüche gelöst. Weitere mögliche Ausgestaltungen der Erfindung sind insbesondere in den abhängigen Ansprüchen angegeben.

Die erfindungsgemäße Werkzeughälfte für eine Spritzgussmaschine zum Herstellen eines Spritzgussteils mit wenigstens einem buchsenartigen Einlegeteil umfasst einen Formbereich, der zumindest einen Teil einer Kavität für das Spritzgussteil bildet. Des Weiteren umfasst die Werkzeughälfte einen sich im Inneren der Werkzeughälfte und durch den Formbereich hindurch ersteckenden Beförderungskanal. Zudem umfasst die Werkzeughälfte ein zum Zuführen des Einlegeteils in die Werkzeughälfte ausgelegten Zuführkanal, der sich in vertikaler Richtung durch die Werkzeughälfte erstreckt und in einen Aufnahmebereich des Beförderungskanals mündet. Zudem weist die Werkzeughälfte eine Positioniereinheit auf, die dazu ausgelegt ist, durch eine Bewegung von einer Entformposition in eine Spritzposition in eine Öffnung des Einlegeteils einzudringen und dadurch das Einlegeteil aufzunehmen, wenn dieses im Aufnahmebereich des Beförderungskanals angeordnet ist, und das aufgenommene Einlegeteil vom Aufnahmebereich zu einer Spritzgussposition im Bereich des Formbereichs zu befördern.

Die erfindungsgemäße Werkzeughälfte umfasst also eine Art integrierte Zuführmechanik, um wenigstens ein buchsenartiges Einlegeteil im Bereich einer Kavität in einer vorgegebenen Spritzgussposition anzuordnen, sodass das Einlegeteil nach dem Schließen eines Spritzgusswerkzeugs, welches die erfindungsgemäße Werkzeughälfte umfasst, umspritzt werden kann. Bei dem Formbereich kann es sich um ein separates Bauteil, z.B. einen Formeinsatz, handeln, es ist aber genauso gut möglich, dass der Formbereich kein separates Bauteil ist, sondern z.B. in eine Formplatte eingearbeitet ist. Der Formbereich weist eine oder mehrere Vertiefungen auf, welche eine Negativform für das Spritzgussteil bilden.

Unter buchsenartigem Einlegeteil ist zu verstehen, dass das Einlegeteil eine Öffnung aufweist, welche einen runden oder auch beispielsweise einen eckigen Querschnitt aufweisen kann. Insbesondere kann sich die Öffnung in Längsrichtung des Einlegeteils erstrecken. Bei dem buchsenartigen Einlegeteil kann es sich beispielsweise um eine Buchse, eine Bundbuchse, eine Gewindebuchse, eine Mutter oder dergleichen handeln. Mittels der erfindungsgemäßen Werkzeughälfte ist es also möglich, ein solches buchsenartiges Einlegeteil auf ganz einfache Weise im Bereich der Kavität der Werkzeughälfte zu positionieren.

Durch den Zuführkanal ist es möglich, das buchsenartige Einlegeteil ins Innere der Werkzeughälfte zuzuführen. Dadurch, dass sich der Zuführkanal in vertikaler Richtung durch die Werkzeughälfte erstreckt, sind keine Fördermittel oder dergleichen erforderlich, um das Einlegeteil im Inneren der Werkzeughälfte bis zum Beförderungskanal fortzubewegen. Der Zuführkanal kann auch schräg verlaufen, muss also nicht rein in vertikaler Richtung verlaufen. Wesentlich beim Zuführkanal ist jedoch, dass dieser so verläuft, dass das buchsenartige Einlegeteil rein schwerkraftbedingt durch den Zuführkanal zum Aufnahmebereich des Beförderungskanals gelangen kann.

Mittels der Positioniereinheit ist es möglich, das im Aufnahmebereich angeordnete buchsenartige Einlegeteil bis zur Spritzgussposition im Bereich des Formbereichs, also in den Bereich der Kavität, zu befördern. Dafür kann die Positioniereinheit zwischen der besagten Entformposition und der besagten Spritzgussposition insbesondere translatorisch hin und her bewegt werden. Die Positioniereinheit ist dabei so gestaltet, dass sie in die Öffnung des Einlegeteils eindringen und dadurch das Einlegeteil aufnehmen kann, wenn das Einlegeteil im Aufnahmebereich des Beförderungskanals angeordnet ist. Nachdem das Einlegeteil im Aufnahmebereich des Beförderungskanals angekommen ist, muss die Positioniereinheit also nur von der Entformposition in die Spritzposition bewegt werden, in Folge dessen die Positioniereinheit unter anderem auch den Aufnahmebereich des Beförderungskanals passiert, wo die Positioniereinheit in die Öffnung des Einlegeteils gelangt und dieses dadurch ergreift beziehungsweise aufnimmt. Durch weitere Fortbewegung der Positioniereinheit bis zur Spritzposition kann das Einlegeteil in seine Spritzgussposition im Bereich des Formbereichs befördert werden.

Bei der erfindungsgemäßen Werkzeughälfte ist es also nicht mehr erforderlich, eine kostenintensive Peripherie vorzusehen, um das buchsenartige Einlegeteil in seiner Spritzgussposition im Bereich des Formbereichs anzuordnen. Durch die Integration der Positioniereinheit in die Werkzeughälfte ergibt sich eine besonders platzsparende Zuführmechanik, mittels welcher das buchsenartige Einlegeteil im Inneren der Werkzeughälfte bis zur Spritzgussposition im Bereich des Formbereichs befördert werden kann. Bei der erfindungsgemäßen Werkzeughälfte ist es mit sehr kurzen Zykluszeiten möglich, das besagte Spritzgussteil mit dem integrierten Einlegeteil herzustellen.

Zudem ist es mittels der erfindungsgemäßen Werkzeughälfte auch möglich, Spritzgussteile herzustellen, bei welchen das buchsenartige Einlegeteil nicht mit umspritzt wird. Die Positioniereinheit kann beispielsweise so gestaltet sein, dass mittels dieser der Formbereich bei Bedarf - also wenn kein Einlegeteil mit umspritzt werden soll - dicht abgeschlossen werden kann. So ist es möglich, mittels der Werkzeughälfte auch Spritzgussteile herzustellen, bei denen kein Einlegeteil mit umspritzt werden soll.

Durch die integrierte Positioniereinheit ist es darüber hinaus möglich, derartige buchsenartige Einlegeteile besonders zuverlässig immer wieder passgenau an der besagten Spritzgussposition im Bereich des Formbereichs zu positionieren. Es sind beispielsweise keine Handlingroboter oder dergleichen notwendig, um das buchsenartige Einlegeteil in der Spritzgussposition im Bereich des Formbereichs anzuordnen.

Eine Steuerung und Überwachung sämtlicher Funktionen der Werkzeughälfte und auch der Spritzgussmaschine kann von der Werkzeughälfte selbst übernommen werden. Zudem ist es möglich, eine Bestückung mit einer Vielzahl solcher buchsenartiger Einlegeteile zum Beispiel in Nebenzeiten der Spritzgussmaschine vorzunehmen. Eine Zuführung und Bereitstellung der buchsenartigen Einlegeteile kann auf unterschiedlichste Weise erfolgen. Beispielsweise ist es möglich, ein Stangenmagazin oder auch ein Trommelmagazin vorzusehen, welches an den Zuführkanal angeschlossen werden kann. Die Anordnung solcher Magazine kann beispielsweise oben an der Werkzeughälfte oder auch seitlich erfolgen. Auch kann beispielsweise eine pneumatische Zuführeinheit verwendet werden, welche zum Beispiel über einen Schlauch direkt mit der Werkzeughälfte und somit mit Zuführkanal verbunden ist.

Eine mögliche Ausgestaltung der Erfindung sieht vor, dass die Werkzeughälfte einen Kernzug zum Bewegen der Positioniereinheit zwischen der Entformposition und der Spritzposition aufweist. Die Positioniereinheit weist zudem einen im Beförderungskanal angeordneten und mit dem Kernzug verbundene Positionierstift auf. Beim Bewegen der Positioniereinheit von der Entformposition in die Spritzposition wird der Positionierstift innerhalb des Beförderungskanals in Richtung des Formbereichs bewegt. Auf dem Weg von der Entformposition in die Spritzposition passiert der Positionierstift den Aufnahmebereich, und kann dadurch in die Öffnung des Einlegeteils eindringen und dieses aufnehmen, wenn das Einlegeteil im Aufnahmebereich angeordnet ist. Durch weitere Bewegung der Positioniereinheit über den Aufnahmebereich hinaus bis zur Entformposition kann das aufgenommene Einlegeteil in die Spritzgussposition befördert werden. Es ist beispielsweise auch möglich, mehrere solcher Positionierstifte an dem Kernzug vorzusehen. Mittels des besagten Positionierstifts ist es auf einfache und zuverlässige Weise möglich, in die Öffnung des Einlegeteils einzudringen, wenn das Einlegeteil im Aufnahmebereich des Beförderungskanals angeordnet ist. Durch eine translatorische Bewegung des Positionierstifts in Richtung des Formbereichs dringt dieser in die Öffnung des Einlegeteils ein, wenn dieser den Aufnahmebereich passiert. Durch weitere Bewegung des Positionierstifts in Richtung der Kavität kann das Einlegeteil dann bis zur Spritzgussposition befördert werden.

Eine weitere mögliche Ausgestaltung der Erfindung sieht vor, dass im Bereich des Positionierstifts ein Magnet zum Fixieren des mittels des Positionierstifts aufgenommenen Einlegeteils angeordnet ist. Dadurch kann nach dem Eindringen des Positionierstifts in die Öffnung des Einlegeteils auf zuverlässige Weise sichergestellt werden, dass das einmal mittels des Positionierstifts aufgenommene Einlegeteil auch sicher mittels des Positionierstifts gehalten werden kann, insbesondere bis das Einlegeteil unter Vermittlung der Positionierhülse und der Positioniereinheit in die Spritzgussposition befördert wurde.

Erfindungsgemäß ist vorgesehen, dass die Werkzeughälfte eine zwischen einer Fixierstellung und Freigabestellung bewegbare Haltebacke aufweist, die zum Aufnehmen des Einlegeteils unterhalb vom Zuführkanal angeordnet ist. Die Haltebacke ragt in der Fixierstellung so weit in den Beförderungskanal hinein, dass diese eine Bewegung des im Aufnahmebereich angeordneten Einlegeteils in Richtung des Formbereichs blockiert. Die Haltebacke ist in der Freigabestellung soweit aus dem Beförderungskanal herausbewegt, dass diese eine Bewegung der Positioniereinheit mitsamt dem durch diese aufgenommenen Einlegeteil in Richtung des Formbereichs freigibt. Die Haltebacke weist einen Aufnahmebereich auf, der auf die Außenkontur des Einlegeteils abgestimmt ist. Die Haltebacke weist also eine Kontur auf, welche beispielsweise einem Negativ von einem Teilbereich des Einlegeteils entspricht. Fällt das Einlegeteil schwerkraftbedingt durch den Zuführkanal in den Aufnahmebereich herunter, so gelangt dieses in die Haltebacke und wird darin zuverlässig gehalten. Solange sich die Haltebacke in ihrer Fixierstellung befindet, kann das aufgenommene Einlegeteil nicht in Längsrichtung des Beförderungskanals bewegt werden. Die Positioniereinrichtung kann dadurch problemlos in Richtung des Einlegeteils bewegt werden und so in die Öffnung des Einlegeteils eintauchen, um das Einlegeteil aufzunehmen. Nachdem das Einlegeteil mittels der Positioniereinrichtung aufgenommen wurde, kann diese weiter in Richtung der Spritzposition bewegt werden. Dabei sind die Haltebacke und die Positioniereinheit geometrisch so aufeinander abgestimmt, dass die Positioniereinheit beim Passieren der Haltebacke diese von ihrer Fixierstellung in die Freigabestellung herunterdrückt. Dadurch kann die Positioniereinheit mitsamt dem aufgenommenen Einlegeteil die Haltebacke passieren und das Einlegeteil in der Spritzgussposition im Bereich der Kavität des Formbereichs positionieren.

In weiterer möglicher Ausgestaltung der Erfindung ist es vorgesehen, dass eine Rückstellfeder eine Rückstellkraft in Richtung der Fixierstellung auf die Haltebacke ausübt und die Positioniereinheit die Haltebacke beim Passieren des Aufnahmebereichs in die Freigabestellung drückt. Die Rückstellfeder sorgt dafür, dass im ansonsten unbelasteten Zustand die Haltebacke immer automatisch in ihrer Fixierstellung angeordnet ist. Erst wenn auf die Haltebacke eine Kraft aufbracht wird, die groß genug ist, die von der Rückstellfeder aufgebrachte Rückstellkraft zu überwinden, wird die Haltebacke in ihre Freigabestellung bewegt. Die Positioniereinheit und die Haltebacke weisen eine jeweilige derart aufeinander abgestimmte Form auf, dass die Positioniereinheit die Haltebacke beim Passieren des Aufnahmebereichs in die Freigabestellung drückt. Die Formgebung der Positioniereinheit und der Haltebacke sind so aufeinander abgestimmt, dass die Positioniereinheit die Haltebacke erst dann in die Freigabestellung drückt, wenn das Einlegeteil bereits zuverlässig mittels der Positioniereinheit von der Haltebacke aufgenommen wurde. Im aufeinander abgestimmten Zusammenspiel zwischen der Positioniereinheit der Haltebacke kann also jederzeit zuverlässig sichergestellt werden, dass das Einlegeteil zunächst sicher von der Haltebacke aufgefangen werden kann, wenn das Einlegeteil durch den Zuführkanal schwerkraftbedingt in den Aufnahmebereich fällt. Zudem kann durch die Haltebacke sichergestellt werden, dass das aufgenommene Einlegeteil sich nicht verschiebt, während die Positioniereinheit durch die Öffnung des Einlegeteils geschoben wird, während das Einlegeteil mittels der Haltebacke aufgenommen ist. Erst wenn das Einlegeteil zuverlässig mittels der Positioniereinheit aufgenommen wird, drückt die Positioniereinheit bei weiterer Bewegung in Richtung des Formbereichs die Haltebacke in ihre Freigabestellung herunter, sodass die Positioniereinheit die Haltebacke passieren kann.

Eine weitere mögliche Ausgestaltung der Erfindung sieht vor, dass die Haltebacke eine Schräge aufweist, entlang welcher die Positioniereinheit beim Passieren des Aufnahmebereichs entlanggleitet und dadurch die Haltebacke von der Fixierstellung in die Freigabestellung drückt. Auf diese Weise kann ganz einfach sichergestellt werden, dass beim Passieren der Haltebacke die Positioniereinheit die Haltebacke erst dann in die Freigabestellung drückt, wenn die Positioniereinheit das Einlegeteil sicher aufgenommen hat. Die Positioniereinheit kann eine entsprechende Kontur aufweisen, welche entlang der besagten Schräge der Haltebacke entlanggleiten und somit die Haltebacke nach unten drücken kann. Es ist auch möglich, dass an der Positioniereinheit eine Schräge vorgesehen ist, welche beim Entlanggleiten an der Haltebacke diese in die Freigabestellung drückt.

In weiterer möglicher Ausgestaltung der Erfindung ist es vorgesehen, dass die Werkzeughälfte eine Verriegelungseinheit aufweist, welche dazu ausgelegt ist, die Positioniereinheit in ihrer Spritzposition zu verriegeln, in der das mittels des Positioniereinheit aufgenommene Einlegeteil in der Spritzgussposition angeordnet ist. Die Verriegelungseinheit kann beispielsweise über eine Art Klaue verfügen, welche so ausgefahren werden kann, dass diese eine Bewegung der Positioniereinheit sperrt. Auch ist es beispielsweise möglich, dass der besagte Kernzug und die Positioniereinheit mittels eines hydraulischen Zylinders bewegbar sind, wobei der hydraulische Zylinder über besagte Verriegelungseinheit verriegelt werden kann. Die Verriegelungseinheit kann auch beispielsweise über eine Art seitliche Kulisse für die Verriegelung der Positioniereinheit sorgen. Mittels der Verriegelungseinheit kann sichergestellt werden, dass die Positioniereinheit in ihrer Spritzposition verriegelt wird. Beim Spritzgussvorgang herrschen mitunter sehr hohe Drücke, sodass durch Verriegeln der Positioniereinheit in ihrer Spritzposition sichergestellt werden kann, dass weder die Positioniereinheit noch das mittels der Positioniereinheit aufgenommene Einlegeteil in unerwünschter Weise durch den Spritzdruck verschoben beziehungsweise bewegt werden.

In weiterer möglicher Ausgestaltung der Erfindung ist es vorgesehen, dass die Werkzeughälfte eine Sensorik aufweist, welche dazu ausgelegt ist, eine Position des Einlegeteils und/oder der Positioniereinheit zu ermitteln und entsprechende Positionssignale an eine Steuerung der Werkzeughälfte zu übermitteln. Die Steuerung ist dazu eingerichtet, in Abhängigkeit von den Sensorsignalen die Positioniereinheit zum Befördern des Einlegeteils in die Spritzgussposition anzusteuern. Die Positioniereinheit muss vor dem Zuführen des Einlegeteils in der Entformposition angeordnet sein. Dies kann mittels der Sensorik überprüft werden, welche dafür beispielsweise Näherungsschalter aufweisen kann. Mittels der Sensorik kann zudem auch überprüft werden, ob das Einlegeteil korrekt in dem Aufnahmebereich angeordnet wurde. Die Sensorik kann beispielsweise auch dazu ausgelegt sein, zu überprüfen, ob die Positioniereinheit in ihrer Spritzposition angeordnet ist und/oder ob das Einlegeteil in der vorgegebenen Spritzgussposition im Bereich des Formbereichs angeordnet ist. Die Spritzposition der Positioniereinheit kann dabei einer Endlage der Positioniereinheit entsprechen. Diese Endlage der Positioniereinheit kann beispielsweise mittels Endschaltern, welche Teil der Sensorik sein können, abgefragt werden. Die Steuerung ist dazu eingerichtet, jeweilige Sensorsignale der Sensorik auszuwerten und dadurch zu überprüfen, ob das Einlegeteil während des Zuführvorgangs beziehungsweise Beförderungsvorgangs des Einlegeteils bis zur Spritzgussposition immer entsprechend richtig angeordnet ist. Dadurch kann ein besonders zuverlässiger Zuführprozess des Einlegeteils bis zur Spritzgussposition sichergestellt werden. Durch die integrierte Steuerung der Werkzeughälfte, kann die Werkzeughälfte sämtliche die Zuführung und Positionierung des Einlegeteils betreffenden Aktionen selbst steuern. Die Spritzgussmaschine, bei der die Werkzeughälfte eingesetzt bzw. verbaut wird, muss selbst also keine Steuerung aufweisen, welche die Positioniereinheit ansteuern kann. Die Werkzeughälfte kann dadurch auch ganz einfach an unterschiedlichen Spritzgussmaschinen verbaut werden, ohne dass aufwendige Umrüstmaßnahmen an der betreffenden Spritzgussmaschine im Hinblick auf die Steuerung notwendig werden.

Eine weitere mögliche Ausgestaltung der Erfindung sieht vor, dass die Steuerung dazu eingerichtet ist, eine Zuführvorrichtung, welche dazu ausgelegt ist, eine Vielzahl der Einlegeteile zu vereinzeln und dem Zuführkanal zuzuführen, zum Zuführen des Einlegeteils in den Aufnahmebereich des Beförderungskanals in Abhängigkeit von den Sensorsignalen anzusteuern. So kann die Sensorik beispielsweise überprüfen, ob die Positioniereinheit in ihrer Entformposition angeordnet ist. Falls dies der Fall sein sollte, kann die Steuerung wiederum die Zuführvorrichtung so ansteuern, dass diese eines der Einlegeteile vereinzelt und dem Zuführkanal zuführt, sodass das jeweilige Einlegeteil schwerkraftbedingt bis zum Aufnahmebereich des Beförderungskanals gelangen kann. Bei der Zuführvorrichtung kann es sich beispielsweise um ein Magazin handeln, das an der Werkzeughälfte angebracht werden kann, um für jeweilige Spritzgussvorgänge jeweilige Einlegeteile zu vereinzeln und dem Zuführkanal zuführen. Auch kann es sich um ein Peripheriegerät bei der Zuführvorrichtung handeln, welches beispielsweise über einen Rütteltopf verfügt, von wo aus zum Beispiel pneumatisch über einen Schlauch die Einlegeteile bis zur Werkzeughälfte und somit zum Zuführkanal befördert werden können. Die Werkzeughälfte kann also über ihre eigene Steuerung unter Berücksichtigung der Sensorsignale eine solche Zuführvorrichtung ansteuern.

Gemäß einer weiteren möglichen Ausgestaltung der Erfindung ist es vorgesehen, dass die Steuerung dazu eingerichtet ist, die Spritzgussmaschine zum Herstellen des Spritzgussteils anzusteuern, wenn die Steuerung anhand der Sensorsignale ermittelt hat, dass das Einlegeteil in der Spritzgussposition angeordnet ist. Die Werkzeughälfte selbst kann also über ihre integrierte Steuerung die Spritzgussmaschine ansteuern, in welcher die Werkzeughälfte verbaut ist. Sobald anhand der Sensorsignale ermittelt wurde, dass das Einlegeteil sich in der Spritzgussposition befindet, kann die Steuerung die Spritzgussmaschine so ansteuern, dass ein die Werkzeughälfte umfassendes Spritzgusswerkzeug der Spritzgussmaschine geschlossen, anschließend ein Kunststoff in die Kavität gespritzt und dadurch das in der Spritzgussposition angeordnete Einlegeteil unter Ausbildung des Spritzgussteils vom Kunststoff umspritzt wird.

Bei dem erfindungsgemäßen Verfahren zum Herstellen eines Spritzgussteils mit wenigstens einem buchsenartigen Einlegeteil wird die erfindungsgemäße Werkzeughälfte oder eine mögliche Ausgestaltung der Werkzeughälfte verwendet, wobei zunächst das Einlegeteil in den Zuführkanal zugeführt wird, wonach das Einlegeteil schwerkraftbedingt in den Aufnahmebereich des Beförderungskanals gelangt. Danach wird die Positioniereinheit von der Entformposition bis zur Spritzposition bewegt, infolgedessen die Positioniereinheit in eine Öffnung des im Aufnahmebereich angeordneten Einlegeteils eindringt und dieses aufnimmt sowie bis zur Spritzgussposition im Bereich des Formbereichs befördert. Danach wird eine Spritzgussmaschine zum Herstellen des Spritzgussteils mittels einer Steuerung der Werkzeughälfte angesteuert, und zwar so, dass ein die Werkzeughälfte umfassendes Spritzgusswerkzeug der Spritzgussmaschine geschlossen, ein Kunststoff in die Kavität gespritzt und das in der Spritzgussposition angeordnete Einlegeteil unter Ausbildung des Spritzgussteils vom Kunststoff umspritzt wird. Die erläuterten möglichen Ausgestaltungen der Werkzeughälfte sind als mögliche Ausgestaltungen des Verfahrens und umgekehrt anzusehen, wobei die Werkzeughälfte insbesondere Mittel zur Durchführung der Verfahrensschritte aufweist.

Weitere Vorteile, Merkmale und Einzelheiten der Erfindung können sich aus der nachfolgenden Beschreibung möglicher Ausführungsbeispiele sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in:
- Fig. 1: eine schematische Draufsicht auf eine Spritzgussmaschine, die zwei Werkzeughälften aufweist, mittels welchen ein Spritzgussteil mit wenigstens einem buchsenartigen Einlegeteil hergestellt werden kann, wobei eine der beiden Werkzeughälften eine Art integrierten Zuführmechanismus zum Zuführen des buchsenartigen Einlegeteils in eine Spritzgussposition aufweist;
- Fig. 2: eine Perspektivansicht der Werkzeughälfte mit dem integrierten Zuführmechanismus, wobei oberseitig an der Werkzeughälfte ein Magazin zum Bereitstellen und Vereinzeln einer Vielzahl der Einlegeteile angebracht ist;
- Fig. 3: eine seitliche Schnittansicht der beiden Werkzeughälften im geschlossenen Zustand, wobei sich im Inneren der einen Werkzeughälfte eine Positioniereinheit befindet, welche dazu dient, die buchsenartigen Einlegeteile im Bereich eines Formeinsatzes zu positionieren;
- Fig. 4: eine perspektivische Detailansicht von einem Ausschnitt im Inneren der Werkzeughälfte, in der die Positioniereinheit angeordnet ist, wobei ein Teil eines vertikal in der Werkzeughälfte verlaufenden Zuführkanals zu erkennen ist, der in einen Aufnahmebereich mündet, wo eine Haltebacke zum Aufnehmen des Einlegeteils angeordnet ist;
- Fig. 5: eine Perspektivansicht eines vorderen Teils der Positioniereinheit, welche einen Aufnahmestift aufweist, welcher zum Aufnehmen der Einlegeteile dient;
- Fig. 6: eine Abfolge von Abbildungen, in denen eine Bewegung des Aufnahmestifts durch den Aufnahmebereich dargestellt wird, wodurch das zunächst mittels der Haltebacke aufgenommene Einlegeteil mittels des Aufnahmestifts aufgenommen und die Haltebacke durch die Positioniereinheit nach unten gedrückt wird;
- Fig. 7: eine Perspektivansicht einer ersten Ausführungsform einer Verriegelungseinheit, mittels welcher die Positioniereinheit verriegelt werden kann;
- Fig. 8: eine Perspektivansicht einer zweiten Ausführungsform der Verriegelungseinheit;

In den Figuren sind gleiche oder funktionsgleiche Elemente mit den gleichen Bezugszeichen versehen worden.

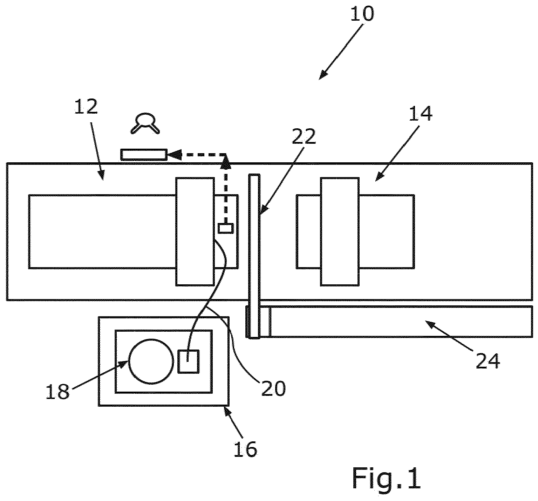

Eine Spritzgussmaschine 10 ist in einer schematischen Draufsicht in Fig. 1 gezeigt. Die Spritzgussmaschine 10 umfasst zwei Werkzeughälften 12, 14, mittels welchen ein Spritzgussteil mit einem umspritzten buchsenartigen Einlegeteil hergestellt werden kann. Die gemäß der vorliegenden Darstellung linke Werkzeughälfte 12 umfasst eine Art integrierte Zuführmechanik, mittels welcher das buchsenartige Einlegeteil in den Bereich einer Kavität der beiden Werkzeughälften 12, 14 befördert werden kann. Zur Spritzgussmaschine 10 kann noch eine Zuführperipherie 16 gehören, welche einen Rütteltopf 18 zum Bevorraten und Vereinzeln der buchsenartigen Einlegeteile aufweisen kann. Die Zuführperipherie 16 kann zudem einen Schlauch 20 aufweisen, mittels welchem beispielsweise pneumatisch die vereinzelten Einlegeteile der Werkzeughälfte 12 zugeführt werden können. Die gesamte Zuführperipherie 16 kann mobil ausgestaltet sein, kann also bei Bedarf an unterschiedlichen Spritzgussmaschinen 10 bereitgestellt werden. Die Spritzgussmaschine 10 kann darüber hinaus über ein Linearhandling 22 beziehungsweise einen Roboter verfügen, mittels welchem die hergestellten Spritzgussteile aus den geöffneten Werkzeughälften 12, 14 entnommen und zum Beispiel auf einem Förderband 24 abgelegt werden können.

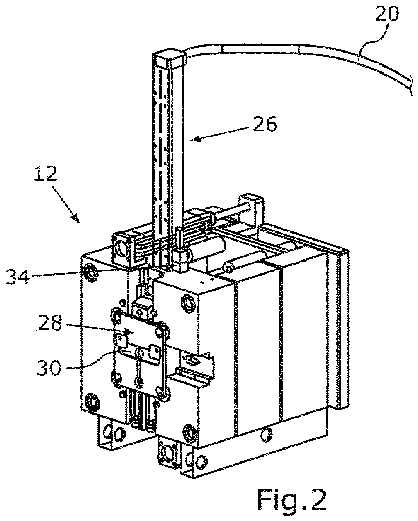

In Fig. 2 ist die Werkzeughälfte 12 in einer Perspektivansicht gezeigt. Oberseitig am Werkzeug 12 ist ein Magazin 26 angeschlossen, das über den bereits erwähnten Schlauch 20 mit den buchsenartigen Einlegeteilen versorgt werden kann. Die Zuführung der Einlegeteile mittels des Schlauchs 20 ist insbesondere dann von Vorteil, wenn sehr viele Spritzgussteile hergestellt werden, also fortlaufend die Einlegeteile benötigt werden. Über den Schlauch 20 kann das Magazin 26 automatisch mit den Einlegeteilen befüllt werden. Bei geringeren Stückzahlen kann auch das Magazin 26 ohne Schlauch 20 betrieben werden. In dem Fall kann das Magazin 26 beispielsweise während Stillstandszeiten mit den Einlegeteilen befüllt werden.

Bei den buchsenartigen Einlegeteilen kann es sich beispielsweise um Buchsen, Bundbuchsen, Gewindebuchsen, Muttern oder dergleichen handeln. Durch das Magazin 26 können die buchsenartigen Einlegeteile ins Innere der Werkzeughälfte 12 gelangen und von dort aus im Bereich eines Formeinsatzes 28, der zumindest einen Teil einer Kavität 30 für das Spritzgussteil bildet, angeordnet werden. In einem unteren Bereich des Magazins 26 ist eine Vereinzelungsvorrichtung 34 angeordnet. Oberhalb von der Vereinzelungsvorrichtung 34 kann eine Vielzahl der Einlegeteile in einer Reihe übereinander angeordnet bevorratet werden. Die Vereinzelungsvorrichtung 34 kann beispielsweise pneumatisch angetrieben werden, sodass die Vereinzelungsvorrichtung 34 auf und ab bewegt werden kann, wobei diese dabei immer wieder das im Magazin 26 gerade ganz unten angeordnete Einlegeteil freigeben kann, sodass dieses einzeln schwerkraftbedingt nach unten in Richtung der Werkzeughälfte 12 gelangen kann.

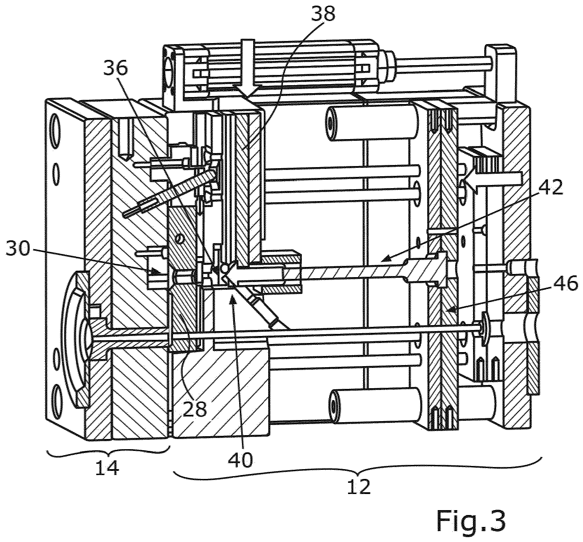

In Fig. 3 sind die beiden Werkzeughälften 12, 14 in einer Seitenschnittansicht im geschlossenen Zustand gezeigt. Die Werkzeughälfte 12 weist einen horizontal verlaufenden Beförderungskanal 36 auf, der sich im Inneren der Werkzeughälfte 12 und durch den Formeinsatz 28 hindurch erstreckt. Der Beförderungskanal 36 muss aber nicht unbedingt rein horizontal verlaufen.

Zum Zuführen der hier nicht dargestellten Einlegeteile ins Innere der Werkzeughälfte 12 umfasst diese einen Zuführkanal 38, der sich in vertikaler Richtung durch die Werkzeughälfte 12 erstreckt und in einen Aufnahmebereich 40 des Beförderungskanals 36 mündet. Des Weiteren umfasst die Werkzeughälfte 12 eine Positioniereinheit 42, die dazu ausgelegt ist, durch eine Bewegung von einer hier gezeigten Entformposition in eine Spritzposition in eine Öffnung des betreffenden Einlegeteils einzudringen und dadurch das betreffende Einlegeteil aufzunehmen, wenn dieses im Aufnahmebereich 40 des Beförderungskanals 36 angeordnet ist, und das aufgenommene Einlegeteil vom Aufnahmebereich 40 bis zu einer Spritzgussposition im Bereich des Formeinsatzes 28 zu befördern.

Die mittels des Magazins 26 vorgehaltenen Einlegeteile können also vereinzelt und somit einzeln dem sich vertikal erstreckenden Zuführkanal 38 zugeführt werden. Schwerkraftbedingt fallen die Einlegeteile dann einzeln durch den Zuführkanal 38 in den Aufnahmebereich 40 des Beförderungskanals 36. Dort kann die Positioniereinheit das jeweilige Einlegeteil aufnehmen und dieses vom Aufnahmebereich 40 - gemäß der vorliegenden Darstellung - nach links durch den Formeinsatz 28 hindurch bis zu der besagten Spritzgussposition befördern. In dieser Spritzgussposition ragt das Einlegeteil 32 dann so weit in die Kavität der beiden Werkzeughälften 12, 14 hinein, dass im Zuge eines Spritzgussvorgangs das so positionierte Einlegeteil 32 mit Kunststoff umspritzt werden kann.

Abweichend von der Darstellung in Fig. 2 ist es auch möglich, das Magazin 26 wegzulassen. In dem Fall kann der Schlauch 20 so an der Werkzeughälfte 12 angeschlossen werden, dass die Einlegeteile z.B. über den Schlauch 20 im oberen Bereich des Zuführkanals 38 vereinzelt zugeführt werden, wiederum beispielsweise mittels Druckluft. Auch ist es möglich, die Zuführteile mittels des Schlauchs 20 direkt im Inneren der Werkzeughälfte 12 zuzuführen, beispielsweise in einem unteren Bereich des Zuführkanals 38 bzw. oberhalb vom Aufnahmebereich 40.

Die Werkzeughälfte 12 umfasst einen Kernzug 46 zum Bewegen der Positioniereinheit 42 zwischen der hier gezeigten Entformposition und der besagten Spritzposition, welche sich gemäß der vorliegenden Darstellung dann weiter links befindet. Der Kernzug 46 kann beispielsweise hydraulisch angetrieben werden, um diesen nach links und rechts zu bewegen, in Folge dessen die Positioniereinheit 42 entsprechend zwischen der hier gezeigten Entformposition und der weiter links befindlichen Spritzposition hin und her bewegt werden kann. Es sind verschiedenste Antriebskonzepte möglich, um den Kernzug 46 und somit die Positioniereinheit 42 zu bewegen.

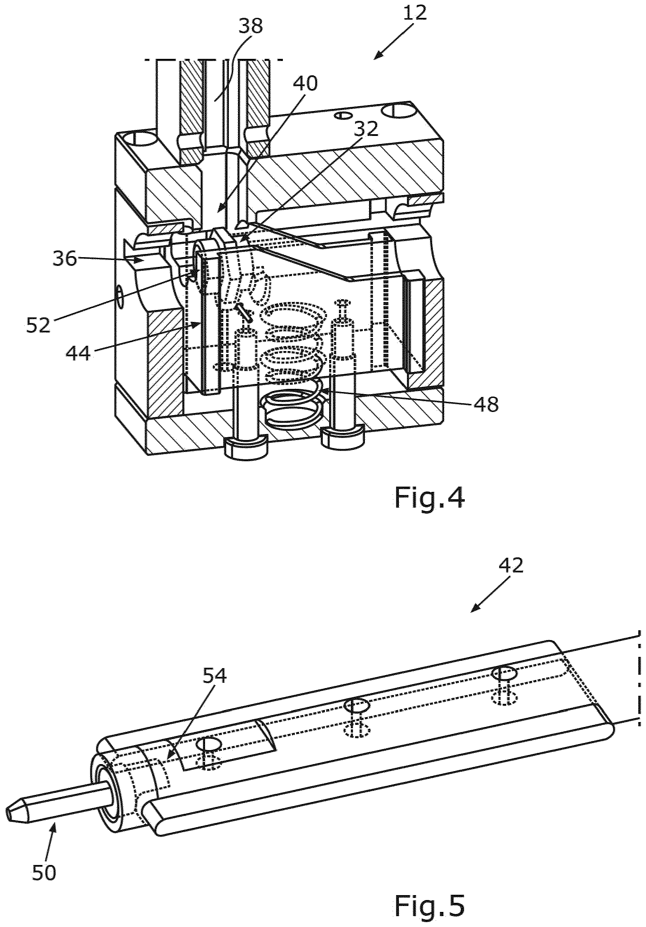

In Fig. 4 ist ein Ausschnitt im Inneren der Werkzeughälfte 12, in der die hier nicht dargestellte Positioniereinheit 42 angeordnet ist gezeigt. Ein unterer Teil des vertikal in der Werkzeughälfte 12 verlaufenden Zuführkanals 38 ist zu erkennen ist, der in den Aufnahmebereich 40 der Beförderungskanals 36 mündet, wo eine Haltebacke 44 zum Aufnehmen des hier erstmals zu erkennenden Einlegeteils 32 angeordnet ist. Die Haltebacke 44 ist unterhalb vom Zuführkanal 38 angeordnet, und zwar im Aufnahmebereich 40. Wenn das Einlegeteil 32 schwerkraftbedingt in den Aufnahmebereich 40 fällt, fängt die Haltebacke 44 also das Einlegeteil 32 auf. Die Haltebacke 44 weist eine Aufnahmekontur zum Aufnehmen des Einlegeteils 32 auf. Diese Aufnahmekontur kann eine Art Negativkontur des Einlegeteils 32 bilden, sodass dieses zuverlässig mittels der Haltebacke 44 aufgenommen werden kann.

Die Haltebacke 44 wird von einer Rückstellfeder 48 mit einer Rückstellkraft beaufschlagt. Vorliegende befindet sich die Haltebacke 44 in ihrer Fixierstellung. Die Rückstellfeder 48 übt gemäß der vorliegenden Darstellung eine Rückstellkraft nach oben auf die Haltebacke 44 aus und drückt diese dadurch in die hier gezeigte Fixierstellung. In dieser Fixierstellung sorgt die Haltebacke 44 dafür, dass das aufgenommen Einlegeteil 32 nicht in Richtung des Beförderungskanals 36 weiter nach links, also aus dem Aufnahmebereich 40 heraus bewegt werden kann.

In Fig. 5 ist ein vorderer Teil der Positioniereinheit 42 in einer Perspektivansicht gezeigt. Die Positioniereinheit 42 weist in ihrem vorderen Bereich einen Aufnahmestift 50 auf. Dieser Aufnahmestift 50 dient dazu, das im Aufnahmebereich 40 angeordneten und mittels der Haltebacke 44 gehaltene Einlegeteil 32 aufzunehmen. Der Aufnahmestift 50 kann, gemäß der Darstellung in Fig. 4, von rechts kommend in eine Öffnung 52 des Einlegeteils 32 eingeführt werden. Um das Einführen in die Öffnung 52 zu erleichtern kann der Aufnahmestift 50 eine konische geformte Spitze aufweisen. Durch entsprechende Bewegung des Kernzugs 46 (s. Fig. 3) von der Entformposition in die Spritzposition wird der Aufnahmestift 50 in den Aufnahmebereich 40 bewegt, wo die Haltebacke 44 das Einlegeteil 32 hält. Da sich die Haltebacke 44 aufgrund der Rückstellfeder 48 automatisch in der angehobenen Fixierstellung befindet, kann das Einlegeteil 32 in Richtung des Beförderungskanals 36 nicht ausweichen, sodass der Aufnahmestift 50 problemlos in die Öffnung 52 des Einlegeteils 32 eindringen und so das Einlegeteil 32 aufnehmen kann.

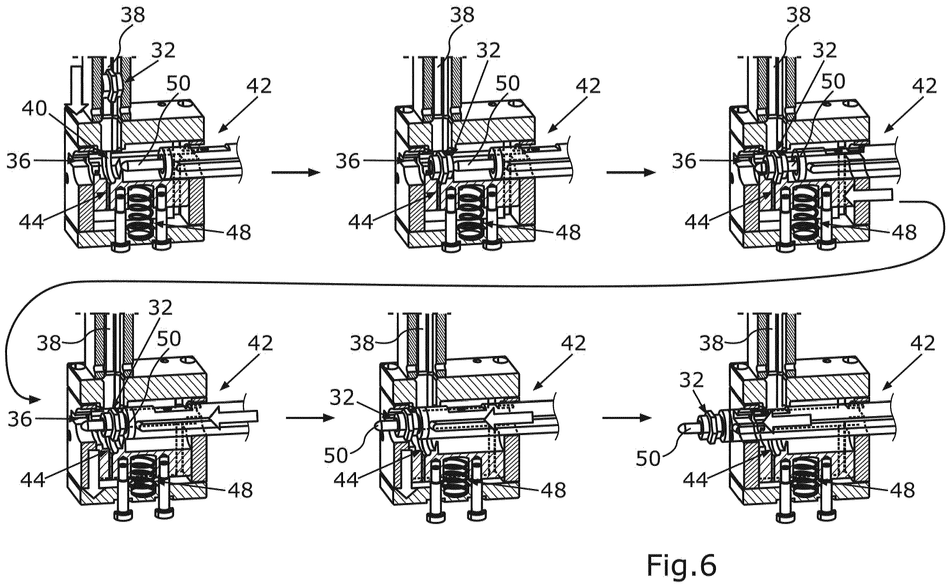

In Fig. 6 ist eine Abfolge von Abbildungen gezeigt, in denen eine Bewegung des Aufnahmestifts 50 durch den Aufnahmebereich 40 dargestellt wird, wodurch das zunächst mittels der Haltebacke 44 aufgenommene Einlegeteil 32 mittels des Aufnahmestifts 50 aufgenommen und die Haltebacke 44 durch die Positioniereinheit 42 nach unten gedrückt wird. In der Abbildung links oben in Fig. 6 gelangt das Einlegeteil 32 zunächst durch den Zuführkanal 38 schwerkraftbedingt nach unten in den Aufnahmebereich 40 des Beförderungskanals 36, der sich durch den Formeinsatz 28 hindurch erstreckt (s. Fig. 3). Die Haltebacke 44 ist aufgrund der von der Rückstellfeder 48 ausgeübten Kraft in ihrer Fixierstellung angeordnet.

Das Einlegeteil 32 fällt also in die Aufnahmekontur der Haltebacke 44 und mittels dieser sicher aufgenommen und gehalten, wie man in der mittleren oberen Abbildung in Fig. 6 erkennen kann. Mittels eines hier nicht näher gekennzeichneten Sensors kann ermittelt werden, ob und wann das Einlegeteil 32 in der Haltebacke 44 angekommen ist und sich dadurch in einer bestimmungsgemäßen Anordnung im Aufnahmebereich 40 befindet. Nachdem detektiert wurde, dass das Einlegeteil 32 mittels der Haltebacke 44 aufgenommen wurde, wird der Kernzug 46 betätigt, infolgedessen die Positioniereinheit 42 mitsamt dem Aufnahmestift 50 von rechts nach links in Richtung des Aufnahmebereichs 40 bewegt wird. Wie man anhand der rechten oberen Abbildung erkennen kann, taucht der Aufnahmestift 50 dann durch die hier nicht näher gekennzeichnete Öffnung 52 des Einlegeteils 32 hindurch. Vorliegend handelt es sich bei der Öffnung 52 um eine Durchgangsöffnung, es kann sich dabei aber auch beispielsweise um ein Sackloch handeln.

Während der Aufnahmestift 50 in die Öffnung 52 eindringt, verbleibt die Haltebacke 44 weiterhin in ihrer Fixierstellung. Das Einlegeteil 32 wird dadurch zuverlässig im Aufnahmebereich 40 fixiert, und zwar so lange, bis das Einlegeteil 32 zuverlässig mittels des Aufnahmestifts 50 aufgenommen wurde, beispielsweise an einem Querschnittssprung der Positioniereinheit 42 anliegt. Die Positioniereinheit 42 kann einen Magnet 54 (s. Fig. 5) aufweisen, mittels welchem das aufgenommene Einlegeteil 32 sicher an der Positioniereinheit 42 gehalten werden kann.

Bei weiterer Bewegung der Positioniereinheit 42 nach links drückt diese die Haltebacke 44 entgegen der von der Rückstellfeder 48 aufgebrachten Rückstellkraft nach unten bis in die Freigabestellung, in der die Haltebacke 44 den Beförderungskanal 36 so weit freigibt, dass die Positioniereinheit 42 mitsamt dem aufgenommenen Einlegeteil 32 weiter nach links in Richtung der Kavität 30 bewegen kann. Die Rückstellfeder 48 wird dadurch entsprechend gestaucht. Die Haltebacke 44 kann beispielsweise eine hier nicht näher gekennzeichnete Schräge aufweist, an der die Positioniereinheit 42 entlangleitet, wenn diese die Haltebacke 44 passiert, infolgedessen die Haltebacke 44 in der beschriebenen heruntergedrückt wird.

Das Einlegeteil 32 kann dann mittels der Positioniereinheit 42 in der Spritzgussposition angeordnet, also im Bereich der Kavität 30 (s. Fig. 3). Zumindest ein Teil des Einlegeteils 32 wird im Bereich der Kavität 30 angeordnet. Die beiden Werkzeughälften 12, 14 werden geschlossen. Nach dem Schließen der Werkzeughälften 12, 14 wird die Kavität 30 des Formeinsatzes 28 mit einem Kunststoff befüllt, in Folge dessen das in der Spritzgussposition angeordnete Einlegeteil 32 von dem Kunststoff teilweise umspritzt wird. Dadurch wird das besagte Spritzgussteil mit dem integrierten Einlegeteil 32 hergestellt.

Die Werkzeughälfte 12 kann eine hier nicht dargestellte Steuerung aufweisen, die dazu ausgelegt ist, die Spritzgussmaschine 10 anzusteuern, um das besagte Spritzgussteil herzustellen. Die Steuerung kann sowohl die Zuführung der Einlegeteile 32 in den Zuführkanal 38 als auch die Bewegung beziehungsweise Betätigung der Positioniereinheit 42 steuern. Darüber hinaus kann die Steuerung der Werkzeughälfte 12 auch die Spritzgussmaschine 10 zum Herstellen des Spritzgussteils ansteuern, sodass die beiden Werkzeughälften 12, 14 geschlossen und anschließend der Kunststoff in die Kavität 30 gespritzt wird, sodass das in der Spritzgussposition angeordnete jeweilige Einlegeteil 32 unter Ausbildung des Spritzgussteils vom Kunststoff umspritzt wird.

In dem Fall ist nur eine Signalschnittstelle zwischen der Werkzeughälfte 12 und der Spritzgussmaschine 10 erforderlich. Oftmals weisen derartige Spritzgussmaschinen 10 bereits eine entsprechend geeignete Signalschnittstelle auf. Die Werkzeughälfte 12 ist somit nicht maschinengebunden und kann mit verschiedenen Spritzgussmaschinen 10 kombiniert und eingesetzt werden. Wenn die Werkzeughälfte 12 über besagte Steuerung verfügt, können die entsprechenden Spritzgussmaschinen 10 günstiger sein, da diese die Funktionalität der Steuerung der Werkzeughälfte nicht abdecken können müssen.

Ein weiterer Vorteil ist, dass die Möglichkeit besteht, eine Funktionsprüfung, z.B. nach einer Wartung, oder Tests durchführen zu können, ohne dass dafür die Spritzgussmaschine 10 benötigt wird. Dadurch, dass die Steuerung das gesamte Spritzgusswerkzeug und somit auch die Werkzeughälfte 12 überwachen kann, weiß man genau, wo und was es für ein Problem oder Fehler es gegebenenfalls gibt. Dadurch vereinfacht sich auch die Bedienung und Überwachung der Spritzgussmaschine.

Es ist aber auch möglich, dass die Werkzeughälfte 12 selbst keine eigene Steuerung aufweist. In dem Fall kann beispielsweise die Spritzgussmaschine 10 eine Steuerung aufweisen. Diese kann sowohl die Zuführung der Einlegeteile 32 in den Zuführkanal 38 als auch die Bewegung beziehungsweise Betätigung der Positioniereinheit 42 steuern.

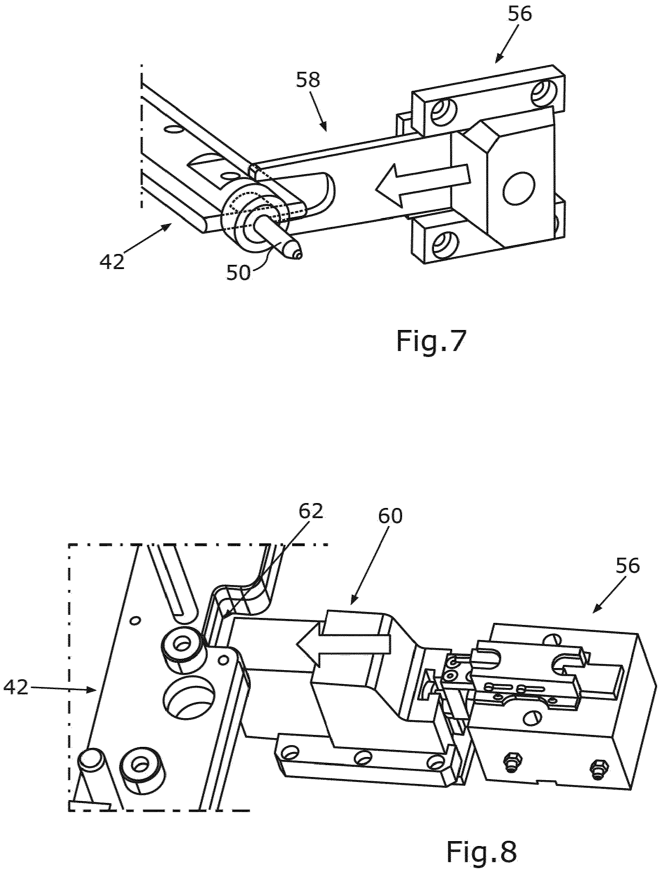

In Fig. 7 ist eine erste Ausführungsform einer Verriegelungseinheit 56 gezeigt, welche dazu ausgelegt ist, die Positioniereinheit 42 in ihrer Spritzposition zu verriegeln, in der das mittels der Positioniereinheit 42 aufgenommene Einlegeteil 32 in der Spritzgussposition angeordnet ist. Hier verfügt die Verriegelungseinheit 56 über ein Art Klaue 58, die über die Positioniereinheit 42 gestülpt beziehungsweise bewegt werden kann, um die Positioniereinheit 42 in ihrer Bewegung zu sperren. Dadurch kann die Positioniereinheit 42 gegenüber einem Spritzdruck verriegelt werden, wenn der Spritzgussvorgang durchgeführt wird.

In Fig. 8 ist eine zweite Ausführungsform der Verriegelungseinheit 56 gezeigt. Diese kann beispielsweise hydraulisch betätigt werden, sodass die Verriegelungseinheit 56 über eine Art seitliche Kulisse 60 beispielsweise unter einen plattenförmigen Bereich der Positioniereinheit 42 gelangen und diese dadurch verriegeln kann. Dadurch kann die Positioniereinheit 42 wiederum gegenüber einem Spritzdruck verriegelt werden, wenn der Spritzgussvorgang durchgeführt wird. Eine Aussparung 62 kann vorgesehen sein, damit die Kulisse 60 keinen allzu großen Weg zwischen einer die Positioniereinheit 42 verriegelnden und einer die Positioniereinheit 42 freigebenden Stellung zurücklegen muss.

### BEZUGSZEICH EN LISTE

- 10: Spritzgussmaschine
- 12: Werkzeughälfte
- 14: Werkzeughälfte
- 16: Zuführperipherie
- 18: Rütteltopf
- 20: Schlauch
- 22: Linearhandling
- 24: Förderband
- 26: Magazin
- 28: Formeinsatz
- 30: Kavität
- 32: buchsenartiges Einlegeteil
- 34: Vereinzelungsvorrichtung
- 36: Beförderungskanal
- 38: Zuführkanal
- 40: Aufnahmebereich des Beförderungskanals
- 42: Positioniereinheit
- 44: Haltebacke
- 46: Kernzug
- 48: Rückstellfeder
- 50: Aufnahmestift
- 52: Öffnung im Einlegeteil
- 54: Magnet
- 56: Verriegelungseinheit
- 58: Klaue
- 60: Kulisse
- 62: Aussparung

## Patentansprüche

1. Werkzeughälfte (12) für eine Spritzgussmaschine (10) zum Herstellen eines Spritzgussteils mit wenigstens einem buchsenartigen Einlegeteil (32), umfassend:
- einen Formbereich (28), der zumindest einen Teil einer Kavität (30) für das Spritzgussteil bildet;
- einen sich im Inneren der Werkzeughälfte (12) und durch den Formbereich (28) hindurch erstreckenden Beförderungskanal (36);
- einen zum Zuführen des Einlegeteils (32) in die Werkzeughälfte (12) ausgelegten Zuführkanal (38), der sich in vertikaler Richtung durch die Werkzeughälfte (12) erstreckt und in einen Aufnahmebereich (40) des Beförderungskanals (36) mündet;
- eine Positioniereinheit (42), die dazu ausgelegt ist, durch eine Bewegung von einer Entformposition in eine Spritzposition in eine Öffnung (52) des Einlegeteils (32) einzudringen und dadurch das Einlegeteil (32) aufzunehmen, wenn dieses im Aufnahmebereich (40) des Beförderungskanals (36) angeordnet ist, und das aufgenommene Einlegeteil (32) vom Aufnahmebereich (40) bis zu einer Spritzgussposition im Bereich des Formbereichs (28) zu befördern, **dadurch gekennzeichnet, dass**
- die Werkzeughälfte (12) eine zwischen einer Fixierstellung und Freigabestellung bewegbare Haltebacke (44) aufweist, die zum Aufnehmen des Einlegeteils (32) unterhalb vom Zuführkanal (38) angeordnet ist;
- die Haltebacke (44) in der Fixierstellung so weit in den Beförderungskanal (36) hineinragt, dass diese eine Bewegung des im Aufnahmebereich (40) angeordneten Einlegeteils (32) in Richtung des Formbereichs (28) blockiert;
- die Haltebacke (44) in der Freigabestellung soweit aus dem Beförderungskanal (36) herausbewegt ist, dass diese eine Bewegung der Positioniereinheit (42) mitsamt dem durch dieses aufgenommene Einlegeteil (32) in Richtung des Formbereichs (28) freigibt.

2. Werkzeughälfte (12) nach Anspruch 1,
**dadurch gekennzeichnet, dass**
- die Werkzeughälfte (12) einen Kernzug (46) zum Bewegen der Positioniereinheit (42) zwischen der Entformposition und der Spritzposition aufweist;
- die Positioniereinheit (42) einen im Beförderungskanal (36) angeordneten und zumindest mittelbar mit dem Kernzug (46) verbundenen Aufnahmestift (50) aufweist;
- beim Bewegen der Positioniereinheit (42) von der Entformposition in die Spritzposition der Aufnahmestift (50) innerhalb des Beförderungskanals (36) in Richtung des Formbereichs (28) bewegt wird, dabei den Aufnahmebereich (40) passiert und bei im Aufnahmebereich (40) angeordnetem Einlegeteil (32) in die Öffnung (52) des Einlegeteils (32) eindringt sowie das Einlegeteil (32) in die Spritzgussposition befördert.

3. Werkzeughälfte (12) nach Anspruch 2,
**dadurch gekennzeichnet, dass**
im Bereich des Aufnahmestifts (50) ein Magnet (54) zum Fixieren des mittels des Aufnahmestifts (50) aufgenommenen Einlegeteils (32) angeordnet ist.

4. Werkzeughälfte (12) nach einem der vorhergehenden Ansprüchen,
**dadurch gekennzeichnet, dass**
- eine Rückstellfeder (48) eine Rückstellkraft in Richtung der Fixierstellung auf die Haltebacke (44) ausübt;
- die Positioniereinheit (42) die Haltebacke (44) beim Passieren des Aufnahmebereichs (40) in die Freigabestellung drückt.

5. Werkzeughälfte (12) nach Anspruch 4,
**dadurch gekennzeichnet, dass**
die Haltebacke (44) eine Schräge aufweist, entlang welcher die Positioniereinheit (42) beim Passieren des Aufnahmebereichs (40) entlanggleitet und dadurch die Haltebacke (44) von der Fixierstellung in die Freigabestellung drückt.

6. Werkzeughälfte (12) nach einem der vorhergehenden Ansprüche,
**dadurch gekennzeichnet, dass**
die Werkzeughälfte (12) eine Verriegelungseinheit (56) aufweist, welche dazu ausgelegt ist, die Positioniereinheit (42) in ihrer Spritzposition zu verriegeln, in der das mittels des Positioniereinheit (42) aufgenommene Einlegeteil (32) in der Spritzgussposition angeordnet ist.

7. Werkzeughälfte (12) nach einem der vorhergehenden Ansprüche,
**dadurch gekennzeichnet, dass**
- die Werkzeughälfte (12) eine Sensorik aufweist, welche dazu ausgelegt ist, eine Position des Einlegeteils (32) und/oder der Positioniereinheit (42) zu ermitteln und entsprechende Positionssignale an eine Steuerung der Werkzeughälfte (12) zu übermitteln;
- die Steuerung dazu eingerichtet ist, in Abhängigkeit von den Sensorsignalen die Positioniereinheit (42) zum Befördern des Einlegeteils (32) in die Spritzgussposition anzusteuern.

8. Werkzeughälfte (12) nach Anspruch 7,
**dadurch gekennzeichnet, dass**
die Steuerung dazu eingerichtet ist, eine Zuführvorrichtung, welche dazu ausgelegt ist, eine Vielzahl der Einlegeteile zu vereinzeln und dem Zuführkanal (38) zuzuführen, zum Zuführen des Einlegeteils (32) in den Aufnahmebereich (40) des Beförderungskanals (36) in Abhängigkeit von den Sensorsignalen anzusteuern.

9. Werkzeughälfte (12) nach Anspruch 7 oder 8,
**dadurch gekennzeichnet, dass**
die Steuerung dazu eingerichtet ist, die Spritzgussmaschine (10) zum Herstellen des Spritzgussteils anzusteuern, wenn die Steuerung anhand der Sensorsignale ermittelt hat, dass das Einlegeteil (32) in der Spritzgussposition angeordnet ist.

10. Verfahren zum Herstellen eines Spritzgussteils mit wenigstens einem buchsenartigen Einlegeteil (32) mittels einer Werkzeughälfte (12) nach einem der vorhergehenden Ansprüche, umfassend die Schritte:
- Zuführen des Einlegeteils (32) in den Zuführkanal (38), wonach das Einlegeteil (32) schwerkraftbedingt in den Aufnahmebereich (40) des Beförderungskanals (36) gelangt;
- Bewegen der Positioniereinheit (42) von der Entformposition bis zur Spritzposition, infolgedessen die Positioniereinheit (42) in eine Öffnung (52) des im Aufnahmebereich (40) angeordneten Einlegeteils (32) eindringt und dieses aufnimmt sowie bis zur Spritzgussposition im Bereich des Formbereichs (28) befördert;
- Ansteuern einer Spritzgussmaschine (10) zum Herstellen des Spritzgussteils mittels einer Steuerung der Werkzeughälfte, sodass ein die Werkzeughälfte (12) umfassendes Spritzgusswerkzeug der Spritzgussmaschine (10) geschlossen, ein Kunststoff in die Kavität (30) gespritzt und das in der Spritzgussposition angeordnete Einlegeteil (32) unter Ausbildung des Spritzgussteils vom Kunststoff umspritzt wird.

## Claims

1. Tool half (12) for an injection moulding machine (10) for producing an injection moulded part having at least one bushing-like insert part (32), comprising:
- a mould region (28), which forms at least part of a cavity (30) for the injection moulded part;
- a transport channel (36) extending inside the tool half (12) and through the mould region (28);
- a feed channel (38), which is designed to feed the insert part (32) into the tool half (12), extends vertically through the tool half (12) and leads into a take-up region (40) of the transport channel (36);
- a positioning unit (42), which is designed, by virtue of a movement from a demoulding position into an injecting position, to penetrate an opening (52) in the insert part (32) and to take up the insert part (32) as a result when said insert part is arranged in the take-up region (40) of the transport channel (36), and to transport the taken-up insert part (32) from the take-up region (40) to an injection moulding position in the region of the mould region (28), **characterized in that**
- the tool half (12) comprises a holding jaw (44), which can be moved between a fixing position and an enabling position and is arranged below the feed channel (38) for the purpose of taking up the insert part (32);
- the holding jaw (44) in the fixing position projects into the transport channel (36) far enough that it blocks a movement of the insert part (32), arranged in the take-up region (40), in the direction of the mould region (28);
- the holding jaw (44) in the enabling position has been moved out of the transport channel (36) far enough that it enables a movement of the positioning unit (42), together with the insert part (32) that it has taken up, in the direction of the mould region (28) .

2. Tool half (12) according to Claim 1, **characterized in that**
- the tool half (12) has a core puller (46) for moving the positioning unit (42) between the demoulding position and the injecting position;
- the positioning unit (42) has a take-up pin (50), which is arranged in the transport channel (36) and is connected at least indirectly to the core puller (46);
- in the course of moving the positioning unit (42) from the demoulding position into the injecting position, the take-up pin (50) is moved within the transport channel (36) in the direction of the mould region (28), passes the take-up region (40) in the process, and, with the insert part (32) arranged in the take-up region (40), penetrates the opening (52) in the insert part (32) and transports the insert part (32) into the injection moulding position.

3. Tool half (12) according to Claim 2, **characterized in that**
a magnet (54) for fixing the insert part (32) taken up by the take-up pin (50) is arranged in the region of the take-up pin (50).

4. Tool half (12) according to one of the preceding claims,
**characterized in that**
- a return spring (48) exerts a return force on the holding jaw (44) in the direction of the fixing position;
- when passing the take-up region (40), the positioning unit (42) presses the holding jaw (44) into the enabling position.

5. Tool half (12) according to Claim 4,
**characterized in that**
the holding jaw (44) has a bevel, along which the positioning unit (42) glides when passing the take-up region (40) and thereby presses the holding jaw (44) from the fixing position into the enabling position.

6. Tool half (12) according to one of the preceding claims,
**characterized in that**
the tool half (12) has a locking unit (56), which is designed to lock the positioning unit (42) in its injecting position, in which the insert part (32) taken up by the positioning unit (42) is arranged in the injection moulding position.

7. Tool half (12) according to one of the preceding claims,
**characterized in that**
- the tool half (12) has a sensor system, which is designed to ascertain a position of the insert part (32) and/or of the positioning unit (42) and to transmit corresponding position signals to a controller of the tool half (12);
- the controller is configured to actuate the positioning unit (42) for the purpose of transporting the insert part (32) into the injection moulding position on the basis of the sensor signals.

8. Tool half (12) according to Claim 7,
**characterized in that**
the controller is configured to actuate a feed device, which is designed to separate a multiplicity of the insert parts and to feed them to the feed channel (38), for the purpose of feeding the insert part (32) into the take-up region (40) of the transport channel (36) on the basis of the sensor signals.

9. Tool half (12) according to Claim 7 or 8,
**characterized in that**
the controller is configured to actuate the injection moulding machine (10) for the purpose of producing the injection moulded part when the controller has ascertained from the sensor signals that the insert part (32) is arranged in the injection moulding position.

10. Method for producing an injection moulded part having at least one bushing-like insert part (32) by means of a tool half (12) according to one of the preceding claims, comprising the following steps:
- feeding the insert part (32) into the feed channel (38), after which gravity causes the insert part (32) to enter the take-up region (40) of the transport channel (36);
- moving the positioning unit (42) from the demoulding position to the injecting position, as a result of which the positioning unit (42) penetrates an opening (52) in the insert part (32) arranged in the take-up region (40), takes up said insert part and transports it to the injection moulding position in the region of the mould region (28);
- actuating an injection moulding machine (10) for the purpose of producing the injection moulded part by means of a controller of the tool half, with the result that an injection moulding tool, comprising the tool half (12), of the injection moulding machine (10) is closed, a plastics material is injected into the cavity (30) and the plastics material is injected around the insert part (32), arranged in the injection moulding position, so as to form the injection moulded part.

## Revendications

1. Moitié d'outil (12) pour une machine de moulage par injection (10) servant à la fabrication d'une pièce moulée par injection pourvue d'au moins une pièce d'insertion (32) en forme de douille, comportant :
- une région de moule (28), qui forme au moins une partie d'une cavité (30) pour la pièce moulée par injection ;
- un canal de transport (36) s'étendant à l'intérieur de la moitié d'outil (12) et à travers la région de moule (28) ;
- un canal d'acheminement (38) conçu pour l'acheminement de la pièce d'insertion (32) dans la moitié d'outil (12), lequel canal s'étend dans la direction verticale à travers la moitié d'outil (12) et débouche dans une région de réception (40) du canal de transport (36) ;
- une unité de positionnement (42) qui est conçue pour pénétrer dans une ouverture (52) de la pièce d'insertion (32) par un déplacement d'une position de démoulage à une position d'injection et pour ainsi recevoir la pièce d'insertion (32), lorsque celle-ci est disposée dans la région de réception (40) du canal de transport (36), et pour transporter la pièce d'insertion (32) reçue à partir de la région de réception (40) jusqu'à une position de moulage par injection dans la zone de la région de moule (28), **caractérisée en ce que**
- la moitié d'outil (12) comprend une mâchoire de retenue (44) déplaçable entre une position de fixation et une position de libération, laquelle mâchoire de retenue est disposée en dessous du canal d'acheminement (38) pour la réception de la pièce d'insertion (32) ;
- la mâchoire de retenue (44) dans la position de fixation pénètre dans le canal de transport (36) dans une mesure telle qu'elle bloque un déplacement, en direction de la région de moule (28), de la pièce d'insertion (32) disposée dans la région de réception (40) ;
- la mâchoire de retenue (44) dans la position de libération est déplacée hors du canal de transport (36) dans une mesure telle qu'elle autorise un déplacement de l'unité de positionnement (42) avec la pièce d'insertion (32) reçue par celle-ci en direction de la région de moule (28).

2. Moitié d'outil (12) selon la revendication 1, **caractérisée en ce que**
- la moitié d'outil (12) comprend un tire-noyau (46) pour le déplacement de l'unité de positionnement (42) entre la position de démoulage et la position d'injection ;
- l'unité de positionnement (42) comprend une goupille de réception (50) disposée dans le canal de transport (36) et connectée au moins indirectement au tire-noyau (46) ;
- lors du déplacement de l'unité de positionnement (42) de la position de démoulage à la position d'injection, la goupille de réception (50) est déplacée à l'intérieur du canal de transport (36) en direction de la région de moule (28), traverse l'occurrence la région de réception (40) et, lorsque la pièce d'insertion (32) est disposée dans la région de réception (40), pénètre dans l'ouverture (52) de la pièce insertion (32) et transporte la pièce d'insertion (32) dans la position de moulage par injection.

3. Moitié d'outil (12) selon la revendication 2, **caractérisée en ce**
**qu'**un aimant (54) servant à la fixation de la pièce d'insertion (32) reçue au moyen de la goupille de réception (50) est disposé dans la région de la goupille de réception (50).

4. Moitié d'outil (12) selon l'une des revendications précédentes,
**caractérisée en ce que**
- un ressort de rappel (48) exerce sur la mâchoire de retenue (44) une force de rappel en direction de la position de fixation ;
- l'unité de positionnement (42) presse la mâchoire de retenue (44) dans la position de libération lorsqu'elle traverse la région de réception (40).

5. Moitié d'outil (12) selon la revendication 4, **caractérisée en ce que**
la mâchoire de retenue (44) présente un biseau le long duquel l'unité de positionnement (42) glisse lorsqu'elle traverse la région de réception (40) et presse ainsi la mâchoire de retenue (44) de la position de fixation dans la position de libération.

6. Moitié d'outil (12) selon l'une des revendications précédentes,
**caractérisée en ce que**
la moitié d'outil (12) comprend une unité de verrouillage (56), laquelle est conçue pour verrouiller l'unité de positionnement (42) dans sa position d'injection, dans laquelle la pièce d'insertion (32) reçue au moyen de l'unité de positionnement (42) est disposée dans la position de moulage par injection.

7. Moitié d'outil (12) selon l'une des revendications précédentes,
**caractérisée en ce que**
- la moitié d'outil (12) comprend un système de capteurs, lequel est conçu pour déterminer une position de la pièce d'insertion (32) et/ou de l'unité de positionnement (42) et pour transmettre des signaux de position correspondants à une commande de la moitié d'outil (12) ;
- la commande est configurée pour commander, en fonction des signaux de capteur, l'unité de positionnement (42) pour le transport de la pièce d'insertion (32) dans la position de moulage par injection.

8. Moitié d'outil (12) selon la revendication 7, **caractérisée en ce que**
la commande est configurée pour commander un dispositif d'acheminement, lequel est conçu pour séparer une pluralité de pièces d'insertion et pour les acheminer au canal d'acheminement (38), pour l'acheminement de la pièce d'insertion (32) dans la région de réception (40) du canal de transport (36) en fonction des signaux de capteur.

9. Moitié d'outil (12) selon la revendication 7 ou 8, **caractérisée en ce que**
la commande est conçue pour commander la machine de moulage par injection (10) pour la fabrication de la pièce moulée par injection, lorsque la commande a déterminé, à l'aide des signaux de capteur, que la pièce d'insertion (32) est disposée dans la position de moulage par injection.

10. Procédé de fabrication d'une pièce moulée par injection pourvue d'au moins une pièce d'insertion (32) en forme de douille au moyen d'une moitié d'outil (12) selon l'une des revendications précédentes, comportant les étapes suivantes :
- acheminement de la pièce d'insertion (32) dans le canal d'acheminement (38), après quoi la pièce d'insertion (32) parvient dans la région de réception (40) du canal de transport (36) sous l'effet de la gravité ;
- déplacement de l'unité de positionnement (42) à partir de la position de démoulage jusqu'à la position d'injection, à la suite de quoi l'unité de positionnement (42) pénètre dans une ouverture (52) de la pièce d'insertion (32) disposée dans la région de réception (40) et reçoit celle-ci et la transporte jusqu'à la position de moulage par injection dans la zone de la région de moule (28) ;
- commande d'une machine de moulage par injection (10) servant à la fabrication de la pièce moulée par injection au moyen d'une commande de la moitié d'outil, de sorte qu'un outil de moulage par injection, comportant la moitié d'outil (12), de la machine de moulage par injection (10) soit fermé, qu'une matière synthétique soit injectée dans la cavité (30) et que la pièce d'insertion (32) disposée dans la position de moulage par injection soit surmoulée avec la matière synthétique en formant la pièce moulée par injection.
